# EUROPEAN PATENT SPECIFICATION

(11) **EP 3 299 987 B1**
(45) Date of publication and mention of the grant of the patent: **31.03.2021**
(21) Application number: 15892269.0
(22) Date of filing: 17.06.2015
(51) Int. Cl.: G06F 21/60, H04L 29/06

(54) **INFORMATION PROCESSING METHOD, ELECTRONIC DEVICE, AND COMPUTER STORAGE MEDIUM**
INFORMATIONSVERARBEITUNGSVERFAHREN, ELEKTRONISCHE VORRICHTUNG SOWIE COMPUTERSPEICHERMEDIUM
PROCÉDÉ DE TRAITEMENT D'INFORMATIONS, DISPOSITIF ÉLECTRONIQUE, ET SUPPORT DE STOCKAGE INFORMATIQUE

(30) Priority: 20.05.2015 CN 201510260039
(43) Date of publication of application: 28.03.2018
(73) Proprietor: Xi'an Zhongxing New Software Co. Ltd., Xian, Shaanxi 710114 (CN)
(72) Inventor: LIU, Fengpeng, Xian Shaanxi 710114 (CN); LIU, Dongmei, Xian Shaanxi 710114 (CN)
(74) Representative: WBH Wachenhausen Patentanwälte PartG mbB
(86) International application number: PCT/CN2015/081684
(87) International publication number: WO 2016/183891

(56) References cited:
- CN-A- 103 024 158
- CN-A- 104 182 706
- CN-A- 104 239 810
- CN-A- 104 408 357
- CN-A- 104 408 357
- KAI XI ET AL: "A fingerprint based bio-cryptographic security protocol designed for client/server authentication in mobile computing environment", SECURITY AND COMMUNICATION NETWORKS, vol. 4, no. 5, 3 December 2010 (2010-12-03), pages 487-499, XP055127297, ISSN: 1939-0114, DOI: 10.1002/sec.225

## Description

### TECHNICAL FIELD

The present invention relates to the field of communication, and in particular relates to an information processing method, an electronic device and a computer storage medium.

### BACKGROUND

Currently, the electronic device may store therein various format of files, such as video, image, audio and other multimedia files data, particularly files involving privacy of the user or files containing important data that stores in the laptop computer. In order to realize the security management of files, traditional method of file encryption is mainly by software solution, the only method of file encryption relying on hardware is the fingerprinting recognition. The method of fingerprinting recognition collects fingerprint by fingerprint recognition module, makes determination by software algorithm and further implements the key management.

As disclosed in CN103024158A, a mobile phone with fingerprint recognition function is provided to provide the security and improve the user experience. And CN104408357A discloses that fingerprints on a fingerprint collection area are collected and used to encrypt files.

However, problems of the method of fingerprinting recognition combining hardware and software are complicated solution, high cost and difficulty of realization. And the software algorithm that corresponds to the fingerprinting recognition is immature and low security.

### SUMMARY

Embodiments of the present invention provide an information processing method, an electronic device and a computer storage medium, so as to achieve file encryption by a combination of hardware and software.

The present invention is defined by the appended independent claims. The technical solution for embodiments of the present invention is achieved as follows.

According to embodiments of the present invention, the present invention provides a method for information processing, applied to electronic device, wherein the electronic device includes a sensor unit, the method comprising: obtaining, by the sensor unit, at least two trigger operations, the sensor unit includes a combination of a plurality of different types of sensors within the electronic device; detecting whether each of the at least two trigger operations meets a preset encryption condition by detecting whether there is an encryption operation in the encryption operation database matching each of the at least two trigger operations in a preset period of time, and acquiring a detection result; determining target file data according to preset rules when the detection result is each of the at least two trigger operations meeting the preset encryption conditions; and encrypting the target file data.

In one embodiment, the detecting whether the at least one trigger operation meets a preset encryption condition comprises: detecting whether there is a encryption operation in the encryption operation database matching each of the at least one trigger operation.

In one embodiment, the at least one trigger operation comprises at least two trigger operations; and the detecting whether there is an encryption operation in the encryption operation database matching each of the at least one trigger operation comprises: detecting whether there is an encryption operation in the encryption operation database matching each of the at least two trigger operations in a preset period of time.

In one embodiment, the determining target file data according to preset rules comprises: determining currently-open file data as the target file data; or determining all multimedia file data stored in the electronic device as the target file data; or determining current file data obtained by the electronic device as the target file data.

In one embodiment, the encrypting the target file data comprises: encrypting the target file data with a encryption key matching with each of the at least one trigger operation.

In one embodiment, the encrypting the target file data comprises: re-encoding the target file data to make the target file data not be opened normally.

Embodiments of the present invention also provide a computer storage medium stores computer-executable instructions, wherein the computer-executable instructions are used for executing the information processing method of embodiments of the present invention.

Embodiments of the present invention also provide an electronic device, comprising: a sensor unit, a detection unit, a determination unit and an encryption unit, wherein the sensor unit is configured to include a combination of a plurality of different types of sensors within the electronic device and to obtain at least two trigger operations; the detection unit is configured to detect whether each of the at least two trigger operations meets a preset encryption condition by detecting whether there is an encryption operation in the encryption operation database matching each of the at least two trigger operations in a preset period of time, and to acquire a detection result; the determination unit is configured to determine target file data according to preset rules when the detection result is each of the at least two trigger operations meeting the preset encryption conditions; and the encryption unit is configured to encrypt the target file data.

In one embodiment, the detection unit is configured to detect whether there is a encryption operation in the encryption operation database matching each of the at least one trigger operation.

In one embodiment, the at least one trigger operation comprises at least two trigger operation; and the detection unit is configured to detect whether there is a encryption operation in the encryption operation database matching each of the at least two trigger operations in a preset period of time.

In one embodiment, the determination unit is configured to determine currently-open file data as the target file data; or determine all multimedia file data stored in the electronic device as the target file data; or determine current file data obtained by the electronic device as the target file data.

In one embodiment, the encryption processing unit is configured to encrypt the target file data with a encryption key matching with each of the at least one trigger operation.

In one embodiment, the encryption processing unit is configured to re-encode the target file data to make the target file data not be opened normally.

The embodiments of the present invention provide the information processing method, electronic device and computer storage medium, the electronic device obtains, by the sensor unit, at least one trigger operation; detects whether the at least one trigger operation meets a preset encryption condition to acquire a detection result; determines target file data according to preset rules when the detection result is the at least one trigger operation meets the preset encryption conditions; and encrypts the target file data. In this way, file encryption can be achieved by the method of a combination of hardware and software, the method is easy to implement and provides higher reliability and do not require extra cost.

### BRIEF DESCRIPTION OF DRAWINGS

Fig.1 is flow chart 1 illustrating a method for information processing according to an embodiment of the present invention.
Fig.2 is schematic diagram 1 illustrating hardware components of the electronic device according to an embodiment of the present invention.
Fig.3 is flow chart 2 illustrating a method for information processing according to an embodiment of the present invention.
Fig.4 is schematic diagram 2 illustrating hardware components of the electronic device according to an embodiment of the present invention.
Fig.5 is a structural diagram illustrating the electronic device according to an embodiment of the present invention.

### DETAILED DESCRIPTION

In embodiments of the present invention, the electronic device obtains, by the sensor unit, at least one trigger operation; detects whether the at least one trigger operation meets a preset encryption condition to acquire a detection result; determines target file data according to preset rules when the detection result is the at least one trigger operation meets the preset encryption conditions; and encrypts the target file data.

The embodiments of the present invention are further described by means of specific embodiments with reference to the accompanying drawings.

### Embodiment 1

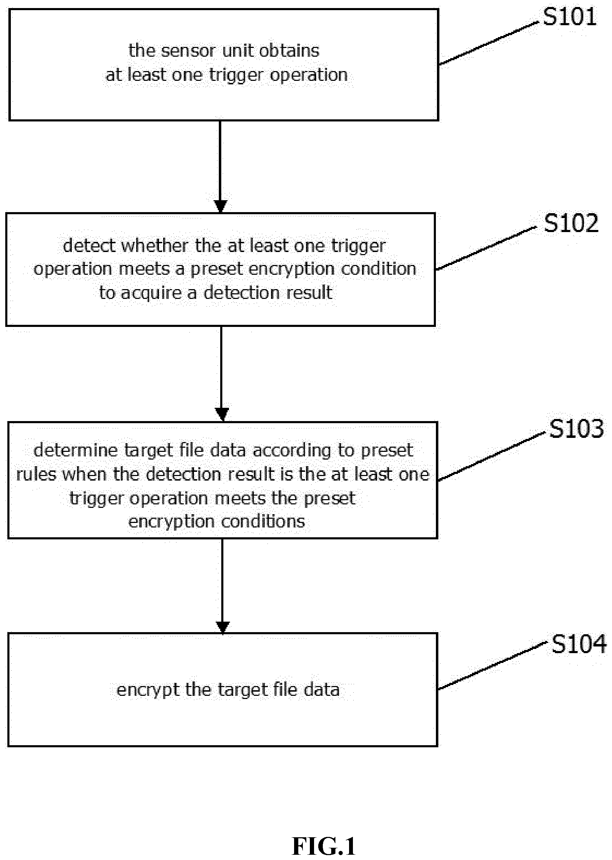

Fig.1 is a flow chart illustrating a method for information processing according to an embodiment of the present invention, and the method may apply to an electronic device, the electronic device includes a sensor unit. As shown in Fig. 1, the method includes the following steps.

In step S101, the sensor unit obtains at least one trigger operation.

The electronic device can be a cell phone, a PC (Personal Computer), a tablet computer, a PDA (personal digital assistant) and so on. The sensor unit may include a combination of different types of sensor within the electronic device, where the different types of sensor may include a temperature sensor, a light sensor, a pressure sensor, an acceleration sensor and so on.

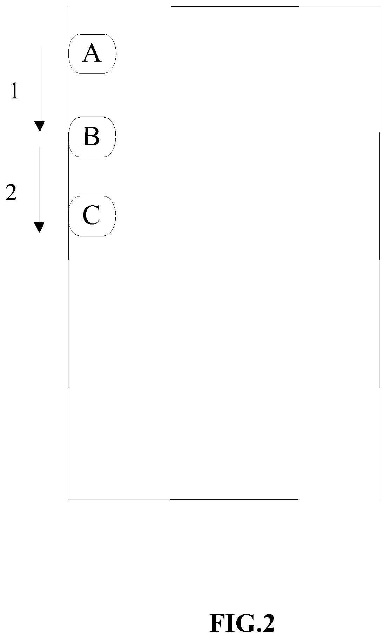

In one embodiment, three temperature sensors named A, B, C are located at upper left side edge of the electronic device, and may acquire the temperature rapidly and accurately. The detailed data, including variations in the temperature in continuous period of time, may be acquired by the temperature sensors if the user fingers the temperature sensor. Particularly, as shown in Fig.2, when the user needs to encrypt the file data and fingers the temperature sensors A, B, C in turn from top to bottom, data information including "this implement", " specific time", "specific speed" and so on will be recorded by the three temperature sensors rapidly and accurately. In this way, the order of "1" "2" sorted as shown in Fig.2 is used as a combination of action, and also as at least one trigger operation obtained by the sensor unit according to embodiment 1 of the present invention.

In step S102, the electronic device may detect whether the at least one trigger operation meets a preset encryption condition to acquire a detection result.

Particularly, the electronic device detects whether the at least one trigger operation meets a preset encryption condition to acquire a detection result by detecting whether there is a encryption operation in the encryption operation database matching each of the at least one trigger operation. Here, the preset encryption condition will be predetermined in the electronic device and stored in the encryption operation database by user; where the preset encryption condition can be set based on the specific composition of the sensor unit within the electronic device.

In step S103, the electronic device determines target file data according to preset rules when the detection result is the at least one trigger operation meets the preset encryption conditions.

Particularly, the step that the electronic device determines target file data according to preset rules comprises: the electronic device determines currently-open file data as the target file data; or determines all multimedia file data stored in the electronic device as the target file data; or determines current file data obtained by the electronic device as the target file data. For example, the target file data may be video, image, audio and other multimedia files data, in particular files involving privacy of the user or files containing important data that stores in the laptop computer.

In one embodiment, the electronic device determines the photos that obtained by the photograph operation as the target file data when the user needs to encrypts the photos that obtained by the photograph operation and the detection result is the at least one trigger operation meets the preset encryption conditions.

In step S104, the electronic device encrypts the target file data.

The electronic device may use different ways to encrypt the target file data. Particularly, the electronic device may encrypt the target file data according to a encryption key matching with each of the at least one trigger operation. In addition, the electronic device may also re-encode the target file data to make the target file data not be opened normally.

In one embodiment, as shown in Fig.2, based on the correspondence between the at least one trigger operation and the encryption key, the electronic device sets the number "1 2" or the English letter "one two" as the code corresponding to the at least one trigger operation "1" "2".

In this way, according to the information processing method of the embodiments of the present invention, the electronic device obtains, by the sensor unit, at least one trigger operation; when the detection result is the at least one trigger operation meets the preset encryption conditions, further determines target file data according to preset rules and encrypts the target file data. In this way, file encryption can be achieved by the method of combination of hardware and software, and the method is easy to implement and provides higher reliability and do not require extra cost.

Embodiments of the present invention also provide a computer storage medium storing computer-executable instructions, where the computer-executable instructions are used for executing the information processing method of embodiment 1 of the present invention.

### Embodiment 2

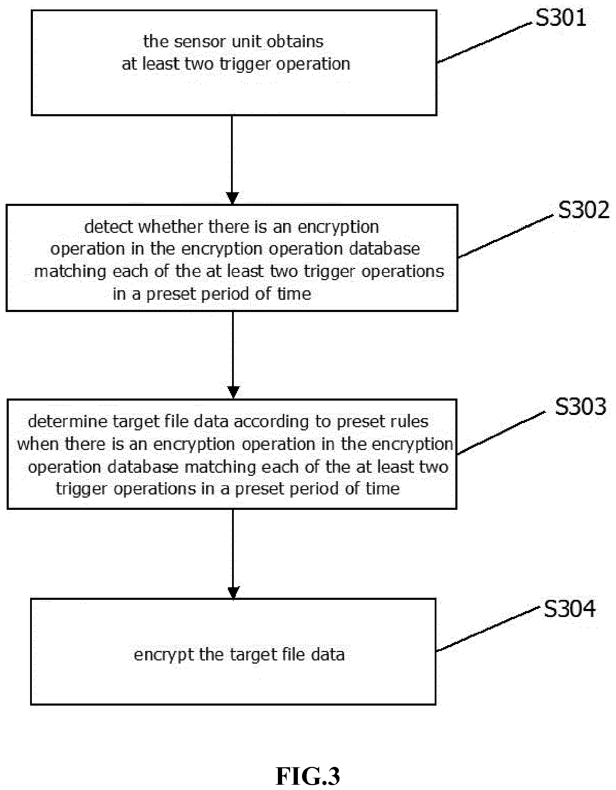

Fig.3 is a flow chart illustrating a method for information processing according to an embodiment of the present invention, and the method may apply to an electronic device, the electronic device includes a sensor unit. As shown in Fig. 3, the method includes the following steps.

In step S301, the sensor unit obtains at least one trigger operation.

Unwanted encryption process may be caused and the encryption process may be performed too often because of user's incorrect manipulation when the electronic device only sets an encryption process corresponding to one trigger operation. To solve this problem, the at least one trigger operation according to embodiment 1 may be defined to at least two trigger operation, that is, the electronic device obtains at least two trigger operations by the sensor unit.

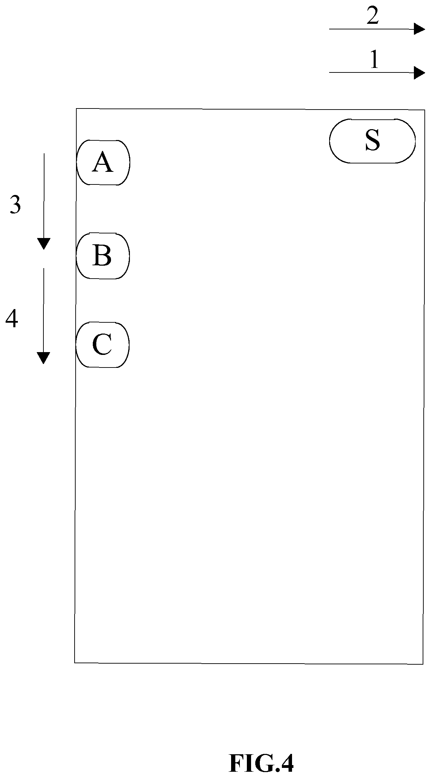

In one embodiment, three temperature sensors named A, B, C are located at upper left side edge of the electronic device, and may acquire the temperature rapidly and accurately. Particularly, as shown in Fig.4, when the user needs to encrypt the file data and fingers the temperature sensors A, B, C in turn from top to bottom, data information including "this implement", " specific time", "specific speed" and so on will be recorded by the three temperature sensors rapidly and accurately. Meanwhile, a light sensor named S is located at upper right corner of the electronic device, and may acquire the particular intensity values of the light rapidly and accurately. The detailed data, including variations in the intensity of the light in continuous period of time, may be acquired by the light sensor if the light sensor is covered and light is reduced. Particularly, as shown in Fig.4, when the user fingers the light sensor S and "unfold-shield-unfold" twice consecutively from left to right, data information including "this implement", " specific time", "specific speed" and so on will be recorded by the light sensor S rapidly and accurately. In this way, the order of "1" "2" "3" "4" sorted as shown in Fig.4 is used as a combination of action, and also as at least two trigger operation obtained by the sensor unit according to embodiment 2 of the present invention.

In step S302, the electronic device may detect whether there is an encryption operation in the encryption operation database matching each of the at least two trigger operations in a preset period of time.
where the preset encryption condition can be set based on the specific composition of the sensor unit within the electronic device.

Particularly, the electronic device detects whether there is an encryption operation in the encryption operation database matching each of the at least two trigger operations in a preset period of time; where, the preset period of time may be set based on the period of time that user implements the at least two trigger operations and the detection rate of the electronic device. in practical use, as the detection rate that the electronic device detects whether there is an encryption operation in the encryption operation database matching each of the at least two trigger operations is very quickly, the consumption time for detection may be negligible and the preset period of time may be set as a period of time for implementing the at least two trigger operations by the nomal user.

In one embodiment, as shown in Fig.4, the encryption operations "1" "2" "3" "4" as shown in figure may be predetermined and stored in the encryption operation database by user. In this way, the electronic device determines that there is an encryption operation in the encryption operation database matching each of the at least two trigger operations in a preset period of time when the electronic device obtains at least two trigger operations such as "1" "2" "3" "4" by the sensor unit.

In step S303, the electronic device determines target file data according to preset rules when there is an encryption operation in the encryption operation database matching each of the at least two trigger operations in a preset period of time.

Particularly, the step that the electronic device determines target file data according to preset rules comprises: the electronic device determines currently-open file data as the target file data; or determines all multimedia file data stored in the electronic device as the target file data; or determines current file data obtained by the electronic device as the target file data. For example, the target file data may be video, image, audio and other multimedia files data, in particular files involving privacy of the user or files containing important data that stores in the laptop computer.

In one embodiment, the electronic device determines the photos that obtained by the photograph operation as the target file data when the user needs to encrypt the photos that obtained by the photograph operation and the detection result is the at least one trigger operation meets the preset encryption conditions.

In step S304, the electronic device encrypts the target file data.

The electronic device may use different ways to encrypt the target file data. Particularly, the electronic device may encrypt the target file data according to a encryption key matching with each of the at least one trigger operation. In addition, the electronic device may also re-encode the target file data to make the target file data not be opened normally.

The electronic device may use different ways to encrypt the target file data. Particularly, the electronic device may encrypt the target file data according to a encryption key matching with each of the at least one trigger operation. In addition, the electronic device may also re-encode the target file data to make the target file data not be opened normally.

In one embodiment, as shown in Fig.4, based on the correspondence between the at least two trigger operations and the encryption key, the electronic device sets the number "1 2 3 4" or the English letter "one two three four" as the code corresponding to the at least two trigger operation "1" "2" "3" "4".

In this way, according to the information processing method of the embodiments of the present invention, the electronic device obtains, by the sensor unit, at least two trigger operations; when the detection result is the at least two trigger operations meeting the preset encryption conditions, further determines target file data according to preset rules and encrypts the target file data. In this way, file encryption can be achieved by the method of combination of hardware and software, and the method is easy to implement and provides higher reliability and do not require extra cost.

Embodiments of the present invention also provide a computer storage medium storing computer-executable instructions, where the computer-executable instructions are used for executing the information processing method of embodiment 1 of the present invention.

### Embodiment 3

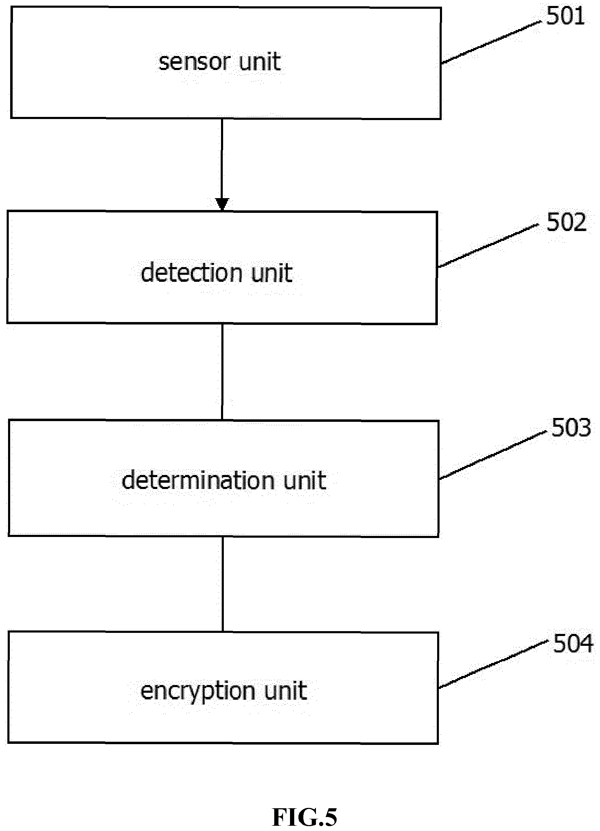

Fig.5 is a structural diagram illustrating the electronic device according to an embodiment of the present invention. as shown in Fig.5, the electronic device comprises: a sensor unit 501, a detection unit 502, a determination unit 503 and an encryption unit 504.

The sensor unit 501 is configured to obtain at least one trigger operation.

The detection unit 502 is configured to detect whether the at least one trigger operation meets a preset encryption condition to acquire a detection result.

Particularly, the detection unit 502 detects whether there is a encryption operation in the encryption operation database matching each of the at least one trigger operation.

In one embodiment, when the at least one trigger operation comprises at least two trigger operations; the detection unit 502 is configured to detect whether there is a encryption operation in the encryption operation database matching each of the at least two trigger operations in a preset period of time.

The determination unit 503 is configured to determine target file data according to preset rules when the detection result is the at least one trigger operation meets the preset encryption conditions.

Particularly, the determination unit 503 is configured to determine currently-open file data as the target file data; or determine all multimedia file data stored in the electronic device as the target file data; or determine current file data obtained by the electronic device as the target file data.

The encryption unit 504 is configured to encrypt the target file data.

Particularly, in one embodiment, the encryption unit 504 is configured to encrypt the target file data with a encryption key matching with each of the at least one trigger operation. In another embodiment, the encryption unit 504 is configured to re-encode the target file data to make the target file data not be opened normally.

According to embodiments of the present invention, the sensor unit 501 may include a combination of different types of sensors within the electronic device, where the different types of sensors may include a temperature sensor, a light sensor, a pressure sensor, an acceleration sensor and so on. The detection unit 502, the determination unit 503 and the encryption unit 504 in the electronic device may be achieved by processor in electronic device or particular logic circuit, for example, when in practical use, may be achieved by CPU (Central Processing Unit), MPU (Micro Processor Unit), DSP (Digital Signal Processor) or FPGA(Field Programmable Gate Array) within electronic device.

Those skilled in the art should understand that the embodiments provided by the present invention may be a method, a system or a computer program product. Accordingly, the present invention may be implemented by foftware, hardware and a combinaton of hardware and software. Furthermore, the present invention may take the form of a computer program product to be implemented in one or more computer storage medium(including but not limited to disk storage and optical memory) storing computer usable program code.

The present invention is described with reference to flowcharts and/or block diagrams of the method, the equipment (system) and the computer program product of the embodiment of the present invention. It should be understood that each flow and/or block in the flowcharts and/or the block diagrams and the combination of the flows and/or blocks in the flowcharts and/or the block diagrams may be implemented by the computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating acts are executed on the computer or the other programmable data processing equipment to generate processing implemented by the computer, and acts for realizing the function specified in one flow or many flows in the flowcharts and/or one block or many blocks in the block diagrams are provided by the instructions executed on the computer or the other programmable data processing equipment.

The above are merely embodiments of the present invention and are not intended to limit the scope of protection of the present invention. It will be apparent to those skilled in the art that various changes, substitutions may be made without departing from the scope of the invention.

### INDUSTRIAL APPLICABILITY

According to the information processing method described in the embodiments of the present invention, the electronic device obtains, by the sensor unit, at least one trigger operation; detects whether the at least one trigger operation meets a preset encryption condition to acquire a detection result; determines target file data according to preset rules when the detection result is the at least one trigger operation meets the preset encryption conditions; and encrypts the target file data. In this way, file encryption can be achieved by the method of a combination of hardware and software, the method is easy to implement and provides higher reliability and do not require extra cost.

## Claims

1. A method for information processing, applied to electronic device, wherein the electronic device includes a sensor unit, the sensor unit comprises a combination of a plurality of different types of sensors within the electronic device, the method comprises:
obtaining (S101), by the sensor unit, at least two different trigger operations on the different types of sensors;
detecting (S102) whether each of the at least two different trigger operations meets a preset encryption condition by detecting (S302) whether there is an encryption operation in the encryption operation database matching each of the at least two different trigger operations in a preset period of time, and acquiring a detection result;
determining (S103) target file data according to preset rules when the detection result is each of the at least two different trigger operations meeting the preset encryption conditions; and
encrypting (S104) the target file data.

2. The method according to claim 1, wherein the determining (S103) target file data according to preset rules comprises:
determining currently-open file data as the target file data; or
determining all multimedia file data stored in the electronic device as the target file data; or
determining current file data obtained by the electronic device as the target file data.

3. The method according to claim 1, wherein the encrypting (S104) the target file data comprises:
encrypting the target file data with a encryption key matching with each of the at least one trigger operation.

4. The method according to claim 1, wherein the encrypting (S104) the target file data comprises:
re-encoding the target file data to make the target file data not be opened normally.

5. An electronic device comprising: a sensor unit (501), a detection unit (502), a determination unit (503) and an encryption unit (504), wherein
the sensor unit (501) comprises a combination of a plurality of different types of sensors within the electronic device and is configured to obtain (S101) at least two different trigger operations on the different types of sensors;
the detection unit (502) is configured to detect (S102) whether each of the at least two different trigger operations meets a preset encryption condition by detecting (S302) whether there is an encryption operation in the encryption operation database matching each of the at least two different trigger operations in a preset period of time, and to acquire a detection result;
the determination unit (503) is configured to determine (S103) target file data according to preset rules when the detection result is each of the at least one trigger operations meeting the preset encryption conditions; and
the encryption unit (504) is configured to encrypt (S104) the target file data.

6. The electronic device according to claim 5, wherein
the determination unit (503) is configured to determine currently-open file data as the target file data; or determine all multimedia file data stored in the electronic device as the target file data;or determine current file data obtained by the electronic device as the target file data.

7. The electronic device according to claim 5, wherein
the encryption unit (504) is configured to encrypt the target file data with a encryption key matching with each of the at least one trigger operation.

8. The electronic device according to claim 5, wherein
the encryption unit (504) is configured to re-encode the target file data to make the target file data not be opened normally.

9. A computer storage medium storing computer executable instructions for performing the method for information processing according to any one of claims 1 to 4.

## Patentansprüche

1. Verfahren zur Informationsverarbeitung, angewandt auf eine elektronische Einrichtung, wobei die elektronische Einrichtung eine Sensoreinheit aufweist, wobei die Sensoreinheit eine Kombination von einer Vielzahl von unterschiedlichen Typen von Sensoren in der elektronischen Einrichtung aufweist, wobei das Verfahren aufweist:
Erhalten (S101), mittels der Sensoreinheit, von zumindest zwei unterschiedlichen Auslösehandlungen über die unterschiedlichen Typen von Sensoren;
Detektieren (S102), ob jede von den zumindest zwei unterschiedlichen Auslösehandlungen einer vorgegebenen Verschlüsselungsbedingung entspricht, mittels Detektierens (S302), ob es eine Verschlüsselungshandlung in der Datenbank der Verschlüsselungshandlung gibt, welche jeder der zumindest zwei unterschiedlichen Auslösehandlungen in einem vorgegebenen Zeitabschnitt entspricht, und Erhalten eines Detektionsergebnisses;
Bestimmen (S103) von Zieldateidaten gemäß vorgegebenen Vorschriften, wenn das Detektionsergebnis ist, dass ein jedes von den zumindest zwei unterschiedlichen Auslösehandlungen den vorgegebenen Verschlüsselungsbedingungen entspricht; und
Verschlüsseln (S104) der Zieldateidaten.

2. Verfahren gemäß Anspruch 1, wobei das Bestimmen (S103) der Zieldateidaten gemäß den vorgegebenen Vorschriften aufweist:
Bestimmen gegenwärtig geöffneter Dateidaten als die Zieldateidaten; oder
Bestimmen aller Mulitmediadateidaten, welche in der elektronischen Einrichtung gespeichert sind, als die Zieldateidaten; oder
Bestimmen gegenwärtiger Dateidaten, welche mittels der elektronischen Einrichtung erhalten wurden, als die Zieldateidaten.

3. Verfahren gemäß Anspruch 1, wobei das Verschlüsseln (S104) der Zieldateidaten aufweist:
Verschlüsseln der Zieldateidaten mit einem Verschlüsselungsschlüssel, welcher jeder von der zumindest einen Auslösehandlung entspricht.

4. Verfahren gemäß Anspruch 1, wobei das Verschlüsseln (S104) der Zieldateidaten aufweist:
Wieder-Kodieren der Zieldateidaten, um die Zieldateidaten nicht gewöhnlich öffnen zu lassen.

5. Elektronische Einrichtung, aufweisend: eine Sensoreinheit (501), eine Detektionseinheit (502), eine Bestimmungseinheit (503) und eine Verschlüsselungseinheit (504), wobei
die Sensoreinheit (501) eine Kombination einer Vielzahl von unterschiedlichen Typen von Sensoren in der elektronischen Einrichtung aufweist und welche eingerichtet ist, zumindest zwei unterschiedliche Auslösehandlungen über die unterschiedlichen Typen von Sensoren zu erhalten (S101);
die Detektionseinheit (502) eingerichtet ist, zu detektieren (S102), ob jede von den zumindest zwei unterschiedlichen Auslösehandlungen einer vorgegebenen Verschlüsselungsbedingung entspricht, mittels Detektierens (S302), ob es eine Verschlüsselungshandlung in der Datenbank der Verschlüsselungshandlung gibt, welche jeder der zumindest zwei unterschiedlichen Auslösehandlungen in einem vorgegebenen Zeitabschnitt entspricht, und ein Detektionsergebnis zu erhalten;
die Bestimmungseinheit (503) eingerichtet ist, Zieldateidaten gemäß vorgegebenen Vorschriften zu bestimmen (S103), wenn das Detektionsergebnis ist, dass ein jedes von den zumindest zwei Auslösehandlungen den vorgegebenen Verschlüsselungsbedingungen entspricht; und
die Verschlüsselungseinheit (504) eingerichtet ist, die Zieldateidaten zu verschlüsseln (S104).

6. Elektronische Einrichtung gemäß Anspruch 5, wobei
die Bestimmungseinheit (503) eingerichtet ist, gegenwärtig geöffnete Dateidaten als die Zieldateidaten zu bestimmen; oder alle Mulitmediadateidaten, welche in der elektronischen Einrichtung gespeichert sind, als Zieldateidaten zu bestimmen; oder gegenwärtige Dateidaten, welche mittels der elektronischen Einrichtung erhalten wurden, als die Zieldateidaten zu bestimmen.

7. Elektronische Einrichtung gemäß Anspruch 5, wobei
die Verschlüsselungseinheit (504) eingerichtet ist, die Zieldateidaten mit einem Verschlüsselungsschlüssel, welcher jeder von der zumindest einen Auslösehandlung entspricht, zu verschlüsseln.

8. Elektronische Einrichtung gemäß Anspruch 5, wobei
die Verschlüsselungseinheit (504) eingerichtet ist, die Zieldateidaten zu wieder-kodieren, um die Zieldateidaten nicht gewöhnlich öffnen zu lassen.

9. Computerspeichermedium, welches Computer-ausführbare Befehle zum Ausführen des Verfahrens zur Informationsverarbeitung gemäß einem der Ansprüche 1 bis 4 speichert.

## Revendications

1. Procédé pour le traitement d'informations, appliqué à un dispositif électronique, ce dispositif électronique comprenant une unité capteur, cette unité capteur consistant en une combinaison d'une pluralité de différents types de capteurs à l'intérieur du dispositif électronique, ce procédé comprenant :
l'obtention (S101), par l'unité capteur, d'au moins deux opérations de déclenchement différentes sur les différents types de capteurs ;
la détection (S1 02) de si chacune des au moins deux opérations de déclenchement différentes remplit ou pas une condition de chiffrement prédéterminée en détectant (S302) s'il y a ou pas une opération de chiffrement dans la base de données d'opérations de chiffrement qui correspond à chacune des au moins deux opérations de déclenchement différentes dans une période de temps prédéterminée, et l'acquisition d'un résultat de détection ;
la détermination (S1 03) de données de fichiers cibles selon des règles prédéterminées lorsque le résultat de détection est que chacune des au moins deux opérations de déclenchement différentes remplit les conditions de chiffrement prédéterminées ; et
le chiffrement (S104) des données de fichiers cibles.

2. Procédé selon la revendication 1, dans lequel la détermination (S103) des données de fichiers cibles selon des règles prédéterminées consiste en :
la détermination de données de fichiers actuellement ouvertes comme les données de fichiers cibles ; ou en
la détermination de toutes les données de fichiers multimédia dans le dispositif électronique comme les données de fichiers cibles ; ou en
la détermination des données de fichiers actuelles obtenues par le dispositif électronique comme les données de fichiers cibles.

3. Procédé selon la revendication 1, dans lequel le chiffrement (S104) des données de fichiers cibles consiste en :
le chiffrement des données de fichiers cibles avec une clé de chiffrement correspondant à chacune de l'au moins une opération de déclenchement.

4. Procédé selon la revendication 1, dans lequel le chiffrement (S104) des données de fichiers cibles consiste en :
le recodage des données de fichiers cibles pour faire en sorte que les données de fichiers cibles ne soient pas ouvertes normalement.

5. Dispositif électronique comprenant : une unité capteur (501), une unité de détection (502), une unité de détermination (503) et une unité de chiffrement (504),
l'unité capteur (501) consistant en une combinaison d'une pluralité de différents types de capteurs à l'intérieur du dispositif électronique et étant configurée de façon à obtenir (S101) au moins deux opérations de déclenchement différentes sur ces différents types de capteurs ;
l'unité de détection (502) étant configurée de façon à détecter (S102) si chacune des au moins deux opérations de déclenchement différentes remplit ou pas une condition de chiffrement prédéterminée en détectant (S302) s'il y a une opération de chiffrement dans la base de données d'opérations de chiffrement qui correspond à chacune des au moins deux opérations de déclenchement différentes dans une période de temps prédéterminée, et à acquérir un résultat de détection ;
l'unité de détermination (503) étant configurée de façon à déterminer (S103) des données de fichiers cibles selon des règles prédéterminées lorsque le résultat de détection est que chacune de l'au moins une opération de déclenchement remplit les conditions de chiffrement prédéterminées ; et
l'unité de chiffrement (504) étant configurée de façon à chiffrer (S104) les données de fichiers cibles.

6. Dispositif électronique selon la revendication 5, dans lequel
l'unité de détermination (503) est configurée de façon à déterminer des données de fichiers actuellement ouvertes comme les données de fichiers cibles; ou à déterminer toutes les données de fichiers multimédia stockées dans le dispositif électronique comme les données de fichiers cibles ; ou à déterminer des données de fichiers actuelles obtenues par le dispositif électronique comme les données de fichiers cibles.

7. Dispositif électronique selon la revendication 5, dans lequel
l'unité de chiffrement (504) est configurée de façon à chiffrer les données de fichiers cibles avec une clé de chiffrement correspondant à chacune de l'au moins une opération de déclenchement.

8. Dispositif électronique selon la revendication 5, dans lequel
l'unité de chiffrement (504) est configurée de façon à recoder les données de fichiers cibles pour faire en sorte que les données de fichiers cibles ne soient pas ouvertes normalement.

9. Support de stockage d'ordinateur stockant des instructions pouvant être exécutées par un ordinateur pour exécuter le procédé pour le traitement d'informations selon l'une quelconque des revendications 1 à 4.
